# EUROPEAN PATENT APPLICATION

(11) **EP 3 553 023 A1**
(43) Date of publication of application: **16.10.2019**
(21) Application number: 19167003.3
(22) Date of filing: 03.04.2019
(51) Int. Cl.: B82Y 30/00, B82Y 40/00, D06M 11/83, D01F 1/09, H01B 1/22

(54) **STRETCHABLE CONDUCTIVE FIBER AND METHOD OF MANUFACTURING THE SAME**

(30) Priority: 10.04.2018 JP 2018075742
(71) Applicant: Industry-Academic Cooperation Foundation, Yonsei University, Seoul 03722 (KR); Tanaka Kikinzoku Kogyo K.K., Tokyo 100-6422 (JP)
(72) Inventor: Lee, Tae Yoon, 07680 Seoul (KR); Lee, Jae Hong, 57956 Jeollanam-do (KR); Shin, Se Ra, 03726 Seoul (KR); Kang, Su Bin, 05067 Seoul (KR); Choi, Byung Woo, 03499 Seoul (KR); Aoyama, Tatsutaka, Ibaraki, 300-4247 (JP); Nakamura, Noriaki, Ibaraki, 300-4247 (JP)
(74) Representative: Hoffmann Eitle

(57) **Abstract**

Disclosed are a conductive fiber and a method of manufacturing the same. More particularly, the conductive fiber according to the present disclosure includes an elastic fiber constituted of a plurality of filaments and having a hierarchical structure; and a metal nanoshell coated on the elastic fiber, wherein the elastic fiber includes a plurality of metal nanoparticles, the metal nanoparticles forming a network structure wherein the metal nanoparticles are electrically connected to each other.

## Description

### CROSS-REFERENCE TO RELATED APPLICATION

This application claims the priority benefit of Korean Patent Application No. 10-2016-0131338, filed on October 11, 2016 in the Korean Intellectual Property Office, the disclosure of which is incorporated herein by reference.

### BACKGROUND OF THE DISCLOSURE

### Field of the Disclosure

The present disclosure relates to a conductive fiber and a method of manufacturing the same.

### Description of the Related Art

Since the conventional wearable industry provides only limited types of devices such as glasses and watches, there is a need for research into future smart technology that can be used as a key element of bendable devices capable of overcoming such a limitation and, further, stretchable wearable devices.

Especially, such research attracts attention as public interest in IT technology, and highly functional smartware, which is a new concept apparel combining with fashion, such as sportswear, has increased. However, the existing materials easily lose their electrical properties when stretched, and have very weak mechanical or electrical stability.

Meanwhile, to fabricate a fiber-based electronic device such as a strain sensor, it is first necessary to develop a high-performance conductive fiber as an interconnect material.

Existing conductive fibers, which are commercially available and can be purchased in the market, generally have a fiber surface coated with a metal. Although such conductive fibers exhibit superior electrical performance due to the metal coating, the metal coating may be cracked due to external stimuli such as stretching or bending. Accordingly, existing conductive fibers have low stability.

To compensate for these disadvantages, much research has been conducted to fabricate conductive fibers using conductive polymers such as poly(3,4-ethylenedioxythiophene)-poly(styrenesulfonate) (PEDOT:PSS) and polyethylene dioxythiophene-polystyrene sulfonate. However, in this case, it is difficult to achieve high electrical characteristics compared to metals.

Accordingly, existing conductive fibers have limitations in securing both superior electrical performance and mechanical stability. To develop the electronic fiber field, it is necessary to develop high-performance conductive fibers that are capable of compensating for the disadvantages and have high stretchability and stability.

With regard to development of conductive fibers having high stretchability, research into application of various carbon-based conductive materials or metal particles to fiber materials based on polyurethane or poly(styrene-butadiene-styrene) (SBS) has been conducted. However, since metals destabilize the polymers, electrical performance thereof is decreased over time.

Therefore, the aforementioned disadvantages should be overcome to develop a highly stretchable conductive polymer having both high electrical performance and mechanical stability. There is a need for development of a conductive fiber capable of overcoming the disadvantages and securing high stability.

### [Related Documents]

### [Patent Documents]

Korean Patent Application Publication No. 10-2016-0053759 (published on May 13, 2016, entitled "CONDUCTIVE NANO FIBER AND METHOD FOR PRODUCING THE SAME, AND THE CONDUCTIVE NANO FIBER BASED PRESSURE SENSOR")
Korean Patent No. 10-0760652 (registered on September 14, 2007, entitled "MANUFACTURING METHOD OF POLYURETHANE NANOFIBER MATS CONTAINING SILVER NANOPARTICLES")
Korean Patent Application Publication No. 10-2014-0017335 (published on February 11, 2014, entitled "STRETCHABLE AND CONDUCTIVE COMPOSITE FIBER YARN, MANUFACTURING METHOD THEREOF, AND STRETCHABLE AND CONDUCTIVE COMPOSITE SPUN YARN INCLUDING THE SAME")

### SUMMARY OF THE DISCLOSURE

Therefore, the present invention has been made in view of the above problems, and it is one object of the present invention to provide a stretchable conductive fiber having improved electrical characteristics and mechanical stability and a method of manufacturing the same.

It is another object of the present invention to provide a stretchable conductive fiber useable in a strain sensor, a temperature sensor, a heater, or the like.

In accordance with an aspect of the present invention, the above and other objects can be accomplished by the provision of a conductive fiber including an elastic fiber constituted of a plurality of filaments and having a hierarchical structure; and a metal nanoshell coated on the elastic fiber, wherein the elastic fiber includes a plurality of metal nanoparticles, the metal nanoparticles forming a network structure wherein the metal nanoparticles 120 are electrically connected to each other.

In the conductive fiber according to an embodiment of the present disclosure, the elastic fiber may include a repeat unit that is classified into a first segment and a second segment, wherein the first and second segments have different strengths, and a segment having higher strength of the first and second segments generates a stick slip motion by strain.

In the conductive fiber according to an embodiment of the present disclosure, with regard to the hierarchical structure, the filaments may be arranged in parallel with each other, and portions where the filaments are in contact are bonded to each other.

In the conductive fiber according to an embodiment of the present disclosure, the metal nanoparticles and the metal nanoshell may be formed through metal ions absorption into the elastic fiber and reduction of the absorbed metal ions.

The absorption and reduction of the metal ions may be performed one to ten times.

In the conductive fiber according to an embodiment of the present disclosure, the metal may be a noble metal.

In the conductive fiber according to an embodiment of the present disclosure, the number of the filaments may be 2 to 100.

In the conductive fiber according to an embodiment of the present disclosure, the filaments may have an average diameter of 5 µm to 100 µm.

In the conductive fiber according to an embodiment of the present disclosure, the metal nanoparticles may be included in a content of 60 to 90 % by weight.

In the conductive fiber according to an embodiment of the present disclosure, the metal nanoparticles may have an average diameter of 0.1 nm to 200 nm.

In the conductive fiber according to an embodiment of the present disclosure, the metal nanoshell may have an average thickness of 10 nm to 3 µm.

The conductive fiber according to an embodiment of the present disclosure may be used in any one selected from the group consisting of a strain sensor, a temperature sensor, and a heater.

In accordance with another aspect of the present invention, there is provided a method of manufacturing a conductive fiber, the method including: preparing an elastic fiber that is constituted of a plurality of filaments and has a hierarchical structure; absorbing metal ions into the elastic fiber; and reducing the absorbed metal ions.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1A illustrates a perspective view of a conductive fiber according to an embodiment of the present disclosure;
FIG. 1B illustrates a sectional view of a conductive fiber according to an embodiment of the present disclosure;
FIG. 2 illustrates an enlarged segment of a filament of a conductive fiber according to an embodiment of the present disclosure;
FIG. 3 illustrates a flowchart of a method of manufacturing a conductive fiber according to an embodiment of the present disclosure;
FIGS. 4A and 4B illustrate scanning electron microscope (SEM) images of a conductive fiber according to an embodiment of the present disclosure;
FIG. 5 illustrates an energy dispersive spectrometry (EDS) image of a conductive fiber according to an embodiment of the present disclosure;
FIG. 6 is a graph illustrating electrical conductivity dependent upon the number of metal ions absorption and reduction of a conductive fiber according to an embodiment of the present disclosure;
FIG. 7 is a graph illustrating electrical conductivity relative to tensile strain of a conductive fiber according to an embodiment of the present disclosure;
FIG. 8 is a graph illustrating mechanical characteristics (stress) relative to tensile strain of a conductive fiber according to an embodiment of the present disclosure; and
FIG. 9 is a graph illustrating a change in resistance dependent upon the number of stretching of a conductive fiber according to an embodiment of the present disclosure.

### DETAILED DESCRIPTION OF THE DISCLOSURE

Hereinafter, the embodiments of the present invention are described with reference to the accompanying drawings and the description thereof but are not limited thereto.

The terminology used in the present disclosure is for the purpose of describing particular embodiments only and is not intended to limit the disclosure. As used in the disclosure, the singular forms "a", "an" and "the" are intended to include the plural forms as well, unless context clearly indicates otherwise. It will be further understood that the terms "comprises" and/or "comprising," when used in this specification, specify the presence of stated constituents, steps, operations, and/or devices, but do not preclude the presence or addition of one or more other constituents, steps, operations, and/or devices.

It should not be understood that arbitrary aspects or designs disclosed in "embodiments", "examples", "aspects", etc. used in the specification are more satisfactory or advantageous than other aspects or designs.

In addition, the expression "or" means "inclusive or" rather than "exclusive or". That is, unless otherwise mentioned or clearly inferred from context, the expression "x uses a or b" means any one of natural inclusive permutations.

Further, as used in the description of the invention and the appended claims, the singular forms "a", "an" and "the" are intended to include the plural forms as well, unless context clearly indicates otherwise.

In addition, when an element such as a layer, a film, a region, and a constituent is referred to as being "on" another element, the element can be directly on another element or an intervening element can be present.

Hereinafter, the present invention is described in detail by explaining exemplary embodiments of the invention with reference to the attached drawings.

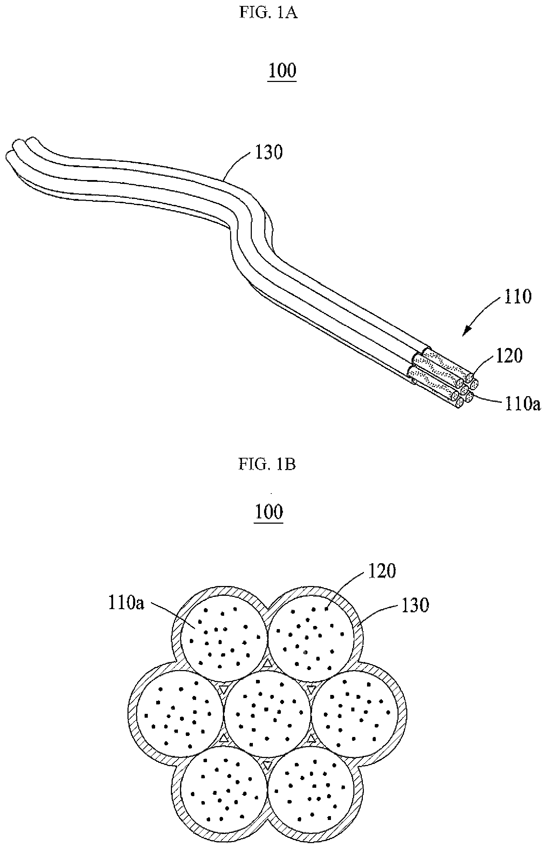

FIGS. 1A and 1B illustrate a conductive fiber according to an embodiment of the present disclosure.

In particular, FIG. 1A illustrates a perspective view of a conductive fiber according to an embodiment of the present disclosure, and FIG. 1B illustrates a sectional view of a conductive fiber according to an embodiment of the present disclosure.

Referring to FIGS. 1A and 1B, a conductive fiber 100 according to an embodiment of the present disclosure includes an elastic fiber 110, a plurality of metal nanoparticles 120 included in the elastic fiber 110, and a metal nanoshell 130 coated on the elastic fiber 110.

The elastic fiber 110 is, for example, an elastic fiber such as rubber. The elastic fiber 110 may be a kind of a polyurethane-based fiber. In an embodiment, at least 85 % or more of fiber formation materials of the elastic fiber 110 may contain a polyurethane bond, whereby the elastic fiber 110 may have high stretchability.

Here, polyurethane, which is a polymer compound having a urethane bond (-NHCOO-), has properties of both an amide (-NHCO-) and an ester (-CO-). That is, polyurethane has a structure wherein a urethane group is substituted for an amide group (-CONH-) of nylon, and thus, has one more oxygen atom than nylon.

The elastic fiber 110 may be manufactured to have various chemical structures using various methods.

A method of manufacturing the elastic fiber 110 may include two steps: a step of reacting polyol with a large amount of diisocyanate to prepare a prepolymer; and a step of polymerizing the prepolymer with diamine having a low molecular weight to increase a polymerization degree.

The elastic fiber 110 may be a copolymer and may include a repeat unit including first and second segments separated from each other. Here, the first and second segments may have different strengths.

In an embodiment, the elastic fiber 110 may be constituted of a repeat unit including a soft segment, as the first segment, and a hard segment, as the second segment having greater strength than the first segment. That is, the elastic fiber 110 may have a di-block copolymer structure including a repeat unit that is constituted of a soft segment and a hard segment. Such a copolymer may have a linear structure.

Here, the soft segment may provide stretchability to the copolymer, and the hard segment may provide mechanical strength to the copolymer due to intermolecular bonding of the hard segment. Accordingly, the elastic fiber 110 may exhibit elasticity due to stretchability of the soft segment and the mechanical strength of the hard segment.

In an embodiment, in the case of the hard segment, urethane and urea groups included in the hard segment may respectively form hydrogen bonds, thereby being present in a kind of a crystalline form.

When the elastic fiber 110 is strained at a high tensile rate and thus most of the soft segment is stretched, a high rate of stress is applied to the hard segment, and a stick slip motion wherein hydrogen bonds inside the hard segment are broken, pushed back, and bonded again may occur.

In particular, a stick slip motion may occur when the hard segment having greater strength than the soft segment is strained. Such a stick slip motion refers to a phenomenon wherein a plurality of hard segments is bonded in a layered state due to hydrogen bonds to form a crystalline structure and, due to external stress, some of the layers of the hard segments are pushed back and bonded again in a misaligned shape.

The elastic fiber 110 is constituted of a plurality of filaments 110a and has a hierarchical structure.

Here, the hierarchical structure of the elastic fiber 110 refers to a shape wherein the filaments 110a are arranged parallel to each other, and portions where the filaments 110a are in contact are bonded to each other. In particular, the elastic fiber 110 may have a shape wherein the filaments 110a are bonded to each other and thus constitute one fiber.

The number of the filaments 110a may be, for example, 2 to 100, but the present disclosure is not limited thereto.

An average diameter of the filaments 110a of the elastic fiber 110 may be, for example, 5 µm to 100 µm, preferably 5 µm to 30 µm, but the present disclosure is not limited thereto.

The metal nanoparticles 120 are included in the elastic fiber 110. In particular, the metal nanoparticles 120 may be included in an inside and on a surface of the elastic fiber 110. More particularly, the metal nanoparticles 120 may be included in each of the filaments 110a of the elastic fiber 110, i.e., in an inside and on a surface of each of the filaments 110a.

The metal nanoparticles 120 included in the elastic fiber 110 have a network structure wherein the metal nanoparticles 120 are electrically connected to each other.

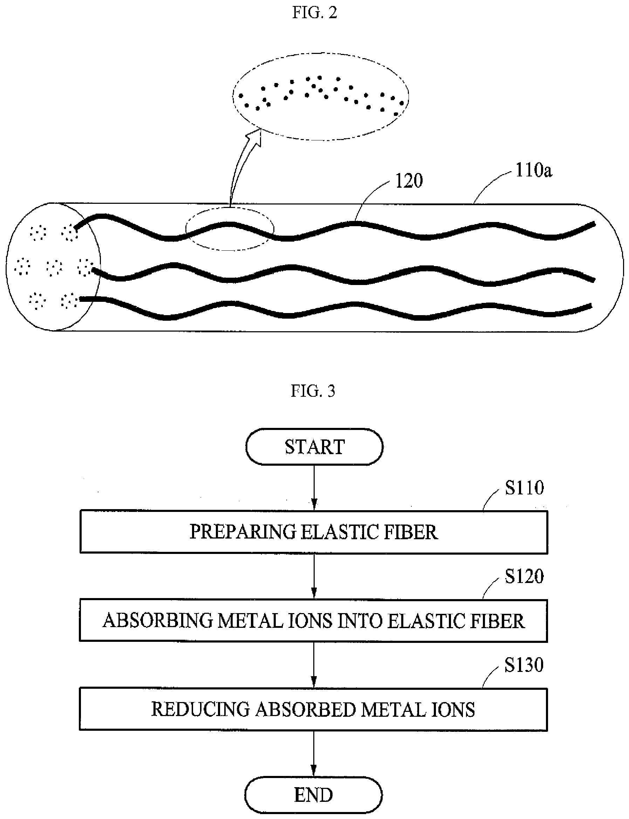

FIG. 2 illustrates an enlarged segment of a filament 100a of a conductive fiber 100 according to an embodiment of the present disclosure.

Referring to FIG. 2, the metal nanoparticles 120 are included in the filaments 110a and have a network structure wherein the metal nanoparticles 120 are electrically connected to each other. Here, the network structure refers to a network structure wherein unit particles or elements are arranged in any direction and connected to each other.

The metal nanoparticles 120 may be formed of, for example, a noble metal such as gold (Au), silver (Ag), platinum (Pt), or iridium (Ir). In an embodiment, the metal nanoparticles 120 may be a plurality of silver nanoparticles.

The metal nanoparticles 120 may be included in a high content of 60 to 90 % by weight in the elastic fiber 110, but the present disclosure is not limited thereto.

In addition, the metal nanoparticles 120 may have a concentration gradient wherein a concentration is decreased from a surface of the elastic fiber 110 to the center thereof.

The metal nanoparticles 120 may have, for example, an average diameter of 0.1 nm to 200 nm, but the present disclosure is not limited thereto.

The conductive fiber 100 is based on the highly stretchable elastic fiber 110 and the elastic fiber 110 includes the metal nanoparticles 120 having a network structure. Accordingly, the conductive fiber 100 may have high stretchability and high conductivity.

In particular, since the conductive fiber 100 is not partially strained or is differently strained due to a hierarchical structure of the elastic fiber 110, in which the filaments 110a bonded to each other in parallel are arranged, and a molecular structure of the elastic fiber 110, by which a stick slip motion may occur, when the conductive fiber 100 is strained, a network structure of the metal nanoparticles 120 may be efficiently maintained along a portion, which is less strained, of the filaments 110a.

Accordingly, the conductive fiber 100 may minimize loss of electrical connection among the metal nanoparticles 120, and may maintain electrical connection without loss of electrical conductivity even under higher strain. That is, the conductive fiber 100 may have higher electrical conductivity even under higher strain due to a micro scale hierarchical structure and nanoscale molecular structure of the elastic fiber 110.

The metal nanoshell 130 is formed to be coated on the elastic fiber 110.

In particular, the metal nanoshell 130 may be constituted of a plurality of metal nanoparticles and may have a shell shape wherein the elastic fiber 110 is coated with the metal nanoparticles.

The metal nanoshell 130 may be formed of, for example, a noble metal such as gold (Au), silver (Ag), platinum (Pt), or iridium (Ir). In an embodiment, the metal nanoshell 130 may be a silver nanoshell.

An average thickness of the metal nanoshell 130 may be, for example, 10 nm to 3 µm, but the present disclosure is not limited thereto.

The metal nanoshell 130 is formed to coat the elastic fiber 110. Since the metal nanoshell 130 is a pure metal component rather than a complex including a polymer, initial electrical conductivity of the conductive fiber 100 may be improved.

In addition, since the metal nanoshell 130 holds each of the filaments 110a such that the conductive fiber 100 is not locally strained when the conductive fiber 100 is strained, each portion of the filaments 110a may be subjected to different strain rates.

In particular, a degree to which the metal nanoshell 130 holds the respective filaments 110a with respect to external strain depends upon a ratio of the metal nanoshell 130 to the diameter or cross-sectional area of each of the filaments 110a. Accordingly, the shapes of strain applied to the respective filaments 110a may be different.

In particular, conductive fiber portions occupied by the metal nanoshell 130 may be considered not to be strained although external strain is applied, Since such conductive fiber portions are locally present in the filaments 110a, an overall efficient network may be maintained.

The metal nanoparticles 120 and the metal nanoshell 130 may be formed by absorbing metal ions into the elastic fiber 110 and reducing the absorbed metal ions.

Hereinafter, a method of manufacturing the conductive fiber according to an embodiment of the present disclosure is described with reference to FIG. 3.

FIG. 3 illustrates a flowchart of a method of manufacturing a conductive fiber according to an embodiment of the present disclosure.

Referring to FIG. 3, a method of manufacturing the conductive fiber according to an embodiment of the present disclosure (S100) includes a step of preparing an elastic fiber (S110), a step of absorbing metal ions into the elastic fiber (S120), and a step of reducing the absorbed metal ions (S130).

In S110, an elastic fiber constituted of a plurality of filaments and having a hierarchical structure is prepared.

The elastic fiber may be manufactured to have various chemical structures using various methods such as wet spinning or dry spinning.

In S120, a plurality of metal ions is absorbed into the elastic fiber.

In particular, the elastic fiber is immersed in a solution containing metal ions for a predetermined time. Subsequently, the elastic fiber is removed from the metal ions-containing solution and a remaining solvent is evaporated for a predetermined time, whereby metal ions are absorbed into the elastic fiber.

In an embodiment, a large amount (40 % by weight) of AgCF₃COO, as a precursor, is dissolved in ethanol as a solvent, thereby preparing a silver ions-containing solution in which a large amount of silver ions (Ag⁺) is dissolved. The elastic fiber is immersed in the silver ions-containing solution for about 30 minutes. Subsequently, the elastic fiber is removed from the solution and remaining ethanol is evaporated at room temperature for about five minutes, whereby a large amount of silver ions is present in an inside and on a surface of the elastic fiber.

In S130, the plurality of metal ions absorbed into the elastic fiber is reduced.

In particular, the metal ions absorbed into the elastic fiber may be reduced into metal nanoparticles and a metal nanoshell using a reducing agent.

In an embodiment, at five minutes after adding a few drops of a reducing agent, such as hydrazine hydrate, formaldehyde, or sodium borohydride (NaBH₄), dropwise to the elastic fiber into which silver ions have been absorbed, the elastic fiber is washed with water such that the reducing agent is removed. As a result, silver ions absorbed into the elastic fiber are reduced into silver nanoparticles and a metal nanoshell is formed on a surface of the elastic fiber.

That is, in S130, when the metal ions absorbed into the elastic fiber are reduced into metal nanoparticles, the metal nanoparticles are contained in an inside and on a surface of the elastic fiber and, at the same time, a surface of the elastic fiber is coated with a metal nanoshell.

In accordance with an embodiment, S120 and S130 may be repeated.

In particular, the step of absorbing metal ions into the elastic fiber (S120) and the step of reducing the metal ions absorbed into the elastic fiber (S130) may be performed once or repeated several times to several tens of times, for example, two to ten times.

When the step of absorbing a plurality of metal ions into the elastic fiber (S120) and the step of reducing the absorbed metal ions (S130) are repeated, a larger number of metal nanoparticles is included in the elastic fiber, i.e., contained in the elastic fiber, and the thickness of the metal nanoshell coated on the elastic fiber also increases, as the number of repetition of the absorption and reduction of the metal ions increases.

In addition, as the step of absorbing metal ions into the elastic fiber and the step of reducing the absorbed metal ions are repeated, the metal nanoparticles and the metal nanoshell may have a concentration gradient wherein a concentration is decreased from a surface of the elastic fiber to the center thereof. In addition, when sufficient absorption and reduction of metal ions are accomplished, the concentration of a metal may be saturated.

The conductive fiber 100 according to an embodiment of the present disclosure may be utilized for various applications, such as a strain sensor, a temperature sensor, and a heater, by controlling the concentrations of metal nanoparticles and metal nanoshell. For example, a conductive fiber used in a heater may include silver nanoparticles and a silver nanoshell at a higher concentration than a conductive fiber used in a strain sensor.

In an embodiment, a strain sensor, as a sensor sensing a strain rate according to tensile strain, is constituted of a plurality of filaments and includes an elastic fiber having a hierarchical structure and a metal nanoshell coated on the elastic fiber. Here, the elastic fiber includes a plurality of metal nanoparticles, and the metal nanoparticles form an electrically interconnected network structure and may be included in a conductive fiber.

More particularly, a strain sensor may include an electrode part and a sensing part. The electrode part may include the conductive fiber. That is, the conductive fiber according to an embodiment of the present disclosure may be used in a strain sensor, particularly may be used in an electrode part of the strain sensor.

The strain sensor may be a strain sensor applicable to a wearable article. The wearable article may be, for example, a garment, a bag, a hat, gloves, or the like. That is, the conductive fiber according to an embodiment of the present disclosure may be used in a strain sensor applicable to wearable articles.

Hereinafter, examples and comparative examples of the present disclosure are disclosed. The examples are provided as embodiments of the present disclosure and are not intended to limit the purpose and scope of the present disclosure,

### Example 1

### (Manufacture of conductive fiber)

An elastic fiber (Creora (210d), manufactured by Hyosung, filament number: 14) was prepared.

0.4 g of AgCF₃COO, as a precursor, was dissolved in 0.6 g of ethanol at a concentration of 40 % by weight, thereby preparing a solution containing a large amount of silver ions (Ag⁺).

The elastic fiber was immersed in the prepared silver ions-containing solution. After 30 minutes, the elastic fiber was removed from the solution and remaining ethanol was evaporated at room temperature (25 °C) for about five minutes, whereby silver ions were absorbed into an inside and onto a surface of the elastic fiber.

Subsequently, about 3 ml of hydrazine hydrate, as a reducing agent, diluted with ethanol in a volume ratio of 50 % was added dropwise to the elastic fiber, into which silver ions had been absorbed, using a spuit. After five minutes, the elastic fiber was washed with water several times to remove the reducing agent, thereby reducing silver ions absorbed into the elastic fiber.

As a result, silver nanoparticles were absorbed into the elastic fiber, and a conductive fiber coated with a silver nanoshell was manufactured.

Subsequently, a process of absorbing silver ions and reducing the absorbed silver ions was repeated eight times.

### Evaluation of shape and characteristics of conductive fiber

### (Scanning electron microscope (SEM) analysis)

The shape of the conductive fiber manufactured according to Example 1 was observed by means of a scanning electron microscope (SEM).

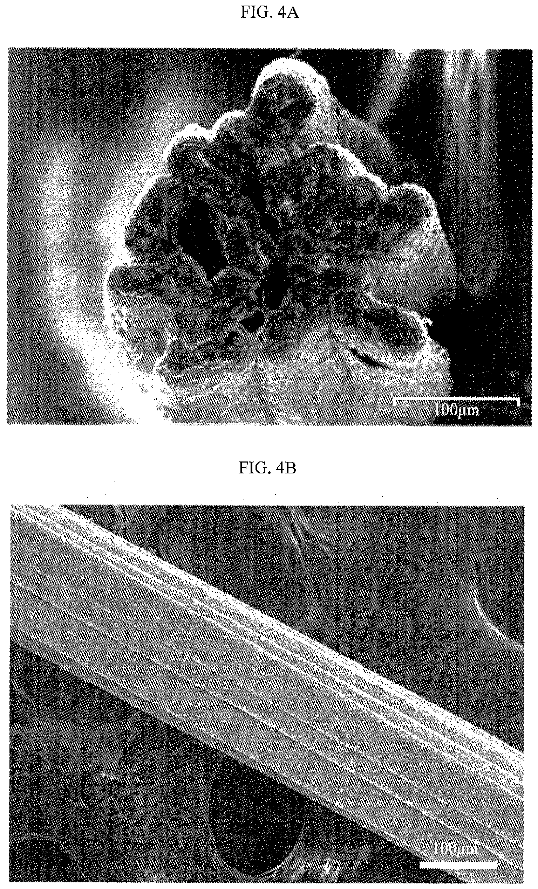

FIGS. 4A and 4B illustrate scanning electron microscope (SEM) images of a conductive fiber according to an embodiment of the present disclosure.

In particular, FIG. 4A illustrates a side-view SEM image of the conductive fiber manufactured in Example 1, and FIG. 4B illustrates a top-view SEM image thereof.

Referring to FIGS. 4A and 4B, it can be confirmed that the conductive fiber manufactured in Example 1 is constituted of a plurality of filaments, is based on an elastic fiber having a hierarchical structure, includes a plurality of metal nanoparticles with a network structure included in the elastic fiber, and is coated with a metal nanoshell, as illustrated in FIG. 1.

### (Energy dispersive spectrometry (SEM) analysis)

The conductive fiber manufactured in Example 1 was subjected to energy dispersive spectrometry (EDS) analysis.

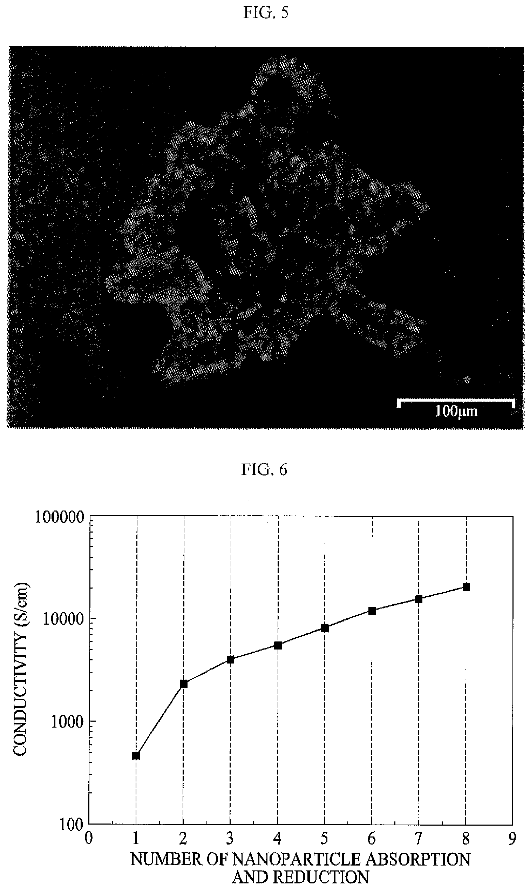

FIG. 5 illustrates an energy dispersive spectrometry (EDS) image of a conductive fiber according to an embodiment of the present disclosure.

In particular, FIG. 5 is an EDS image illustrating metal nanoparticles distribution of the conductive fiber of Example 1 shown in the sectional SEM image (FIG. 4A).

Referring to FIG. 5, it can be confirmed that metal nanoparticles are uniformly distributed also inside the conductive fiber manufactured in Example 1 and form a network thereinside.

### (Characteristic evaluation)

Electrical conductivity characteristics of the conductive fiber manufactured in Example 1 were evaluated.

FIG. 6 is a graph illustrating electrical conductivity dependent upon the number of metal ions absorption and reduction of a conductive fiber according to an embodiment of the present disclosure.

Referring to FIG. 6, electrical conductivity was measured whenever metal ions were absorbed into an elastic fiber and the absorbed metal ions were reduced, upon manufacture of the conductive fiber according to Example 1. Here, it was confirmed that the electrical conductivity of the conductive fiber increased as the frequency of metal ions absorption into the conductive fiber manufactured in Example 1 and reduction of the absorbed metal ions increased.

In particular, when the process of absorbing metal ions into the elastic fiber and reducing the absorbed metal ions was repeated eight times, the conductive fiber exhibited a conductivity of about 20,000 S/cm.

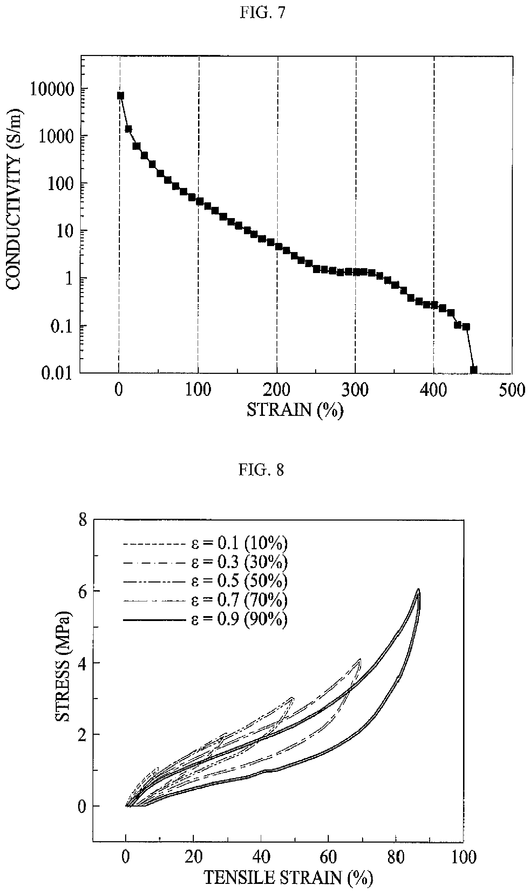

FIG. 7 is a graph illustrating electrical conductivity relative to tensile strain of a conductive fiber according to an embodiment of the present disclosure.

Referring to FIG. 7, it can be confirmed that the conductive fiber manufactured in Example 1 retains electrical performance thereof even if the length thereof is increased to about 5.5 times the original length.

In addition, it can be confirmed that the electrical conductivity of the conductive fiber is continuously decreased as the length thereof continuously increases. From these result, it can be confirmed that the conductive fiber is applicable as a strain sensor.

Mechanical characteristics of the conductive fiber manufactured in Example 1 were evaluated.

FIG. 8 is a graph illustrating mechanical characteristics (stress) relative to tensile strain of a conductive fiber according to an embodiment of the present disclosure.

Referring to FIG. 8, it can be confirmed that, when a 150 % pre-strain was applied to the conductive fiber manufactured in Example 1, and then tensile strain was repeatedly applied thereto twice at each of 10 %, 30 %, 50 %, 70 %, and 90 %, a trajectory is not changed. Accordingly, it can be confirmed that mechanical characteristics are not deteriorated. From this result, it can be confirmed that the conductive fiber retains excellent electrical characteristics and high mechanical stability.

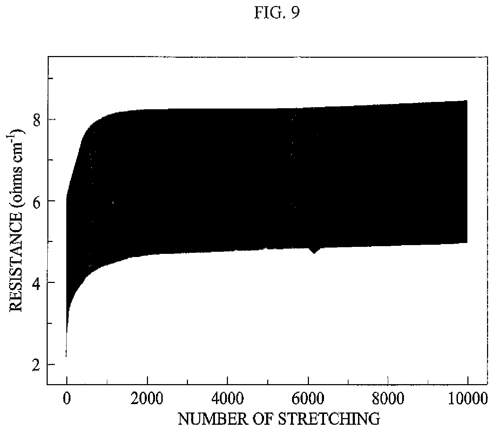

FIG. 9 is a graph illustrating a change in resistance dependent upon the number of stretching of a conductive fiber according to an embodiment of the present disclosure.

Referring to FIG. 9, it can be confirmed that, when a 10 % strain was repeatedly 10,000 times to the conductive fiber manufactured in Example 1 electrical resistance slightly increases at the beginning, but the electrical resistance is stable even when repetitive stains are applied 10,000 times as a whole.

As apparent from the above description, a conductive fiber according to an embodiment of the present disclosure is constituted of a plurality of filaments and uses an elastic fiber having a hierarchical structure, thereby exhibiting improved stretchability and mechanical stability.

In addition, the conductive fiber according to an embodiment of the present disclosure uses a plurality of metal nanoparticles that are included in the elastic fiber and have an electrically interconnected network structure, thereby exhibiting improved electrical characteristics.

Further, in accordance with an embodiment of the present disclosure, a conductive fiber having improved electrical characteristics and mechanical stability may be applied to a strain sensor, a temperature sensor, a heater, and the like.

Although the present invention has been described through limited examples and figures, the present invention is not intended to be limited to the examples. Those skilled in the art will appreciate that various modifications, additions and substitutions are possible, without departing from the scope and spirit of the invention. It should be understood, therefore, that there is no intent to limit the invention to the embodiments disclosed, rather, the invention is to cover all modifications, equivalents, and alternatives falling within the spirit and scope of the invention as defined by the claims.

## Claims

1. A conductive fiber, comprising:
an elastic fiber constituted of a plurality of filaments and having a hierarchical structure; and
a metal nanoshell coated on the elastic fiber,
wherein the elastic fiber comprises a plurality of metal nanoparticles, the metal nanoparticles forming a network structure wherein the metal nanoparticles are electrically connected to each other.

2. The conductive fiber according to claim 1, wherein the elastic fiber comprises a repeat unit that is classified into a first segment and a second segment,
wherein the first and second segments have different strengths, and a segment having higher strength of the first and second segments generates a stick slip motion by strain.

3. The conductive fiber according to claim 1, wherein, with regard to the hierarchical structure, the filaments are arranged in parallel with each other, and portions where the filaments are in contact are bonded to each other.

4. The conductive fiber according to claim 1, wherein the metal nanoparticles and the metal nanoshell are formed through metal ions absorption into the elastic fiber and reduction of the absorbed metal ions.

5. The conductive fiber according to claim 4, wherein the absorption and reduction of the metal ions are performed one to ten times.

6. The conductive fiber according to claim 1, wherein the metal is a noble metal.

7. The conductive fiber according to claim 1, wherein the number of the filaments is 2 to 100.

8. The conductive fiber according to claim 1, wherein the filaments have an average diameter of 5 µm to 100 µm.

9. The conductive fiber according to claim 1, wherein the metal nanoparticles are comprised in a content of 60 to 90 % by weight.

10. The conductive fiber according to claim 1, wherein the metal nanoparticles have an average diameter of 0.1 nm to 200 nm.

11. The conductive fiber according to claim 1, wherein the metal nanoshell has an average thickness of 10 nm to 3 µm.

12. The conductive fiber according to claim 1, wherein the conductive fiber is used in any one selected from the group consisting of a strain sensor, a temperature sensor, and a heater.

13. A method of manufacturing a conductive fiber, the method comprising:
preparing an elastic fiber that is constituted of a plurality of filaments and has a hierarchical structure;
absorbing metal ions into the elastic fiber; and
reducing the absorbed metal ions.
